# EUROPEAN PATENT SPECIFICATION

(11) **EP 2 681 109 B1**
(45) Date of publication and mention of the grant of the patent: **14.01.2015**
(21) Application number: 12708085.1
(22) Date of filing: 27.01.2012
(51) Int. Cl.: C02F 1/02, B63J 4/00

(54) **SYSTEM FOR TREATING BALLAST WATER IN BALLAST TANKS**
BALLASTWATERBEHANDLUNGSSYTEM IN BALLASTTANKS
SYSTÈME DE TRAITEMENT D'EAU DE BALLAST À L'INTERIEUR DE CUVES DE BALLAST

(30) Priority: 03.03.2011 DK 201170108 P
(43) Date of publication of application: 08.01.2014
(73) Proprietor: Bawat A/S, 3500 Værløse (DK)
(72) Inventor: HUMMER, Jan Stumpe, DK-2930 Klampenborg (DK)
(74) Representative: Zacco Denmark A/S
(86) International application number: PCT/DK2012/050038
(87) International publication number: WO 2012/116698

(56) References cited:
- US-A- 3 745 960
- US-A1- 2003 205 136

## Description

The present invention relates to a system for treating ballast water in ballast tanks onboard vessels and offshore constructions, said system comprising:
one or more ballast tanks, a circulating pump circulating or recirculating, via tubing, ballast water from and to the one or more ballast tanks; a nitrogen and/or carbon dioxide generator which is connected to the tubing in such a manner that nitrogen and/or carbon dioxide can be supplied to the ballast water; and
one or more nozzle heads that are functionally connected to the tubing and is/are arranged in one or more ballast tanks, said one or more nozzle heads comprising at least one nozzle for injection of the gas-containing water into the one or more ballast tanks.

According to a further aspect of the invention it relates to a vessel as set forth in claims 7 - 9.

### Background

To uphold the stability of a ship independently of it carrying cargo or not, ships are provided with tanks that can be filled or emptied depending on the nature of the cargo. Such tanks are designated ballast tanks, and the water charged into them is designated ballast water.

When an empty ship or a ship partially carrying cargo leaves a port, ballast water has therefore been charged into the ballast tanks to uphold stability and to adjust the buoyancy of the ship.

Almost always, such ballast water will contain live organisms. When the ships arrive at their destination, and when the ships are once again to take on a cargo, the ballast water is let out again. This discharge of ballast water may thus potentially introduce invasive species to the marine environment in the destination port, which means that the live organisms are moved from their natural habitat to a new biosphere. Those live organisms that are indigenous to another part of the world may be a threat to the local marine life and are therefore designated "biological pollution". Every year, major tank vessels move billions of cubic meters of water with live organisms from one part of the world to another, and the tank vessels are thereby contributing factors in the introduction of hundreds of invasive marine species to new environments which is considered to be one of the world's largest environmental issues.

Some of the live organisms that are entrained with the ballast water into the ballast tanks along with pumped-in mud and other impurities deposit on the interior faces of the ballast tank and sediment at the bottom, and not all of such organisms are flushed out with the ballast water when the ballast tanks are emptied of ballast water. Consequently, there is likewise a need for regularly performing a cleaning of, in particular, the bottom of the ballast tank when it is not replete with ballast water.

Now, specific requirements have been drawn up by the International Maritime Organization (IMO) in respect of how few live organisms are allowed in the pumped-out ballast water, and the present invention aims at ensuring that those requirements are complied with.

In addition to said issues, there are also problems in respect of corrosion of the ballast tanks. The majority of the ships in the world's fleet are made of steel, including the ballast tanks of those ships, and when those tanks are exposed to both oxygen and water in the form of the ballast water, the ballast tanks will be subject to corrosion. Therefore comprehensive preventive measures are made to avoid both corrosion of the steel and the extensive repairs of areas afflicted by corrosion.

Worldwide, there are moreover many costs involved in the preventive work and necessary repairs of corroded areas, and consequently many attempts are made, too, at solving that problem in various ways, ia by treating the surfaces with paint, by anodic protection.

It is known to keep ballast tanks free from microorganisms and to avoid corrosion by reducing the concentration of oxygen by supplying nitrogen gas to the ballast water and hence make the environment in the ballast tank poor in oxygen and hence minimise the presence of microorganisms and aerobic bacteria while simultaneously avoiding corrosion of the ballast tanks.

US 20030205136 discloses a system and a method of treating ballast water while simultaneously preventing corrosion. A nitrogen source produces nitrogen gas which may be pumped directly or via a venturi injector into the ballast water. Water is pumped through the injection to the effect that the water comes into contact with the nitrogen gas. The injector will generate a lot of small bubbles in the nitrogen-containing water, and the oxygen in the ballast water will be dissolved in the small bubbles of nitrogen gas. The water and the many small bubbles are pumped from injector and into the ballast tank where the small bubbles rise to the surface, and the oxygen is released.

The problem associated with the prior art is that the nitrogen generator is coupled to the existing ballast pumping system, and that the system is consequently limited by the capacity and performance of the ballast pump and the tubing systems.

It is the object of the present invention to provide a more efficient treatment of the water in ballast tanks in that at least one nozzle is configured for powered rotation about a first axis.

It is moreover a further advantage of this invention that the treatment time in the tank is more comprehensive and hence more effective, and that a system is also used which inhibits corrosion and may simultaneously be used for cleaning the ballast tanks.

According to one embodiment of the invention, it comprises at least one nozzle configured for powered rotation about both a first and a second axis which is perpendicular or not perpendicular to the first axis to the effect that a three-dimensional mixer pattern is produced.

Hereby it is obtained that the jets can reach into larger areas of the tank area which yields a faster and more effective mixture of the injected gas and the ballast water.

According to another embodiment of the invention, it comprises one or more nozzle heads that are arranged in a lower zone of the ballast tank in the part of the ballast tank where inflow of ballast water takes place.

According to a further embodiment of the invention, it comprises one or more nozzle heads that are arranged flush with the interior bracing/bulkhead of the ballast tank.

Thereby it is obtained that the jets are capable of reaching all areas of the ballast tank which yields a more efficient distribution of the deoxidized water, while simultaneously ensuring optimal cleaning of the surfaces and bottom of the ballast tank.

According to one embodiment of the invention, it comprises two or more nozzle heads arranged in one or more rows, wherein the one or more row(s) extend(s) transversally to the predominant flow direction of the ballast water when it runs into and through the ballast tanks. Additionally, the arrangement takes place in the lower zone of the ballast tank.

Thereby it is obtained that a lead front of deoxidized water is obtained and that the lead front moves through the ballast tank, the water being treated continuously.

According to an embodiment of the invention, the nitrogen or carbon dioxide generator comprises tubings coupled to the tubing system of the ballast water after the ballast pumps, on the delivery side, whereby the generator is also capable of supplying nitrogen or carbon dioxide to the ballast water round the nozzles.

According to one embodiment of the invention, it relates to a vessel, wherein one ballast tank comprises one or more nozzle heads to the effect that the treatment of ballast water takes place in one ballast tank.

According to an embodiment of the invention, two or more ballast tanks comprise one or more nozzle heads to the effect that the treatment of ballast water takes place concurrently in several ballast tanks.

This solution is an easy one to establish in existing ships and offshore constructions.

According to one embodiment of the invention, at least one ballast tank comprises several recirculation systems, wherein the return and feeder pipes of the recirculation systems are associated with nozzle heads, wherein the return and feeder pipes are arranged successively in the flow direction of the ballast tank.

The present invention further relates to a method comprising the measure that the nitrogen or carbon dioxide-containing water is injected into a ballast tank via a rotating nozzle head.

The rotating nozzle head optimises the mixing process and distributes the injected water far better than the hitherto known methods.

An embodiment of the invention comprises the measure that the treated ballast water is conveyed from a first ballast tank to the remaining ballast tanks.

Hereby the efficiently cleaned ballast water is passed on and thereby the treated ballast water is caused to reach to all corners of a ballast tank, and therefore it is avoided that remote areas of the ballast tank contain ballast water that is not treated.

A further embodiment of the method according to the invention comprises the measure that inert gas is supplied to the ballast tanks for periods of time or at intervals to uphold an oxygen-poor environment in the ballast tanks.

This is particularly advantageous when a ballast tank is emptied in order to maintain the oxygen-poor environment.

In an embodiment, the method according to the invention comprises the following successive steps:
that the nitrogen- or carbon dioxide-containing water is sprayed into a ballast tank via a rotating nozzle head; that the treated ballast water is passed on from a first ballast tank to the remaining ballast tanks; that nitrogen and/or carbon dioxide can be supplied to the ballast tanks for periods of time or at intervals to uphold an oxygen-poor environment in the ballast tanks.

According to an embodiment, the method comprises that the nitrogen- or carbon dioxide-containing water is sprayed into several or all of the ballast tanks concurrently via rotating nozzle heads.

This ensures an improved and faster treatment of the water.

An embodiment of the method according to the invention comprises the steps: that the ballast tanks are emptied to a level below the nozzle heads; that fluid is pumped in, through the nozzles, whereby the interior faces of the ballast tank are high-pressure water blasted. By the system also being capable of cleaning the ballast tanks, efficient sludge and sediment control is accomplished by use of a minimum of technical means.

The term "vessel" is to be construed as comprising ships, submarines, offshore structures and man-made constructions for use at sea.

Other embodiments of the invention will appear from the dependent claims.

In the following, the invention will be described in further detail with reference to the figures/drawing showing an embodiment of the system according to the invention.

### List of figures

Figure 1 shows a ship with 12 ballast tanks having a conventional construction of a pumping and tubing system for distributing ballast water in the ballast tanks;
Figure 2 shows a ship with a recirculation system according to the invention;
Figure 3 shows an L-shaped ballast tank, seen in a lateral view, corresponding to section A in figure 4;
Figure 4 shows a ballast tank seen from above, with two nozzle heads;
Figure 5 shows the lower end of a ballast tank near the inflow of ballast water, corresponding to a portion of section A from figure 4;
Figure 6 shows a ballast tank having several recirculation systems coupled to the same ballast tank;
Figure 7 shows an L-shaped ballast tank, a recirculation system and heat exchanger.

### Detailed description with reference to the figures

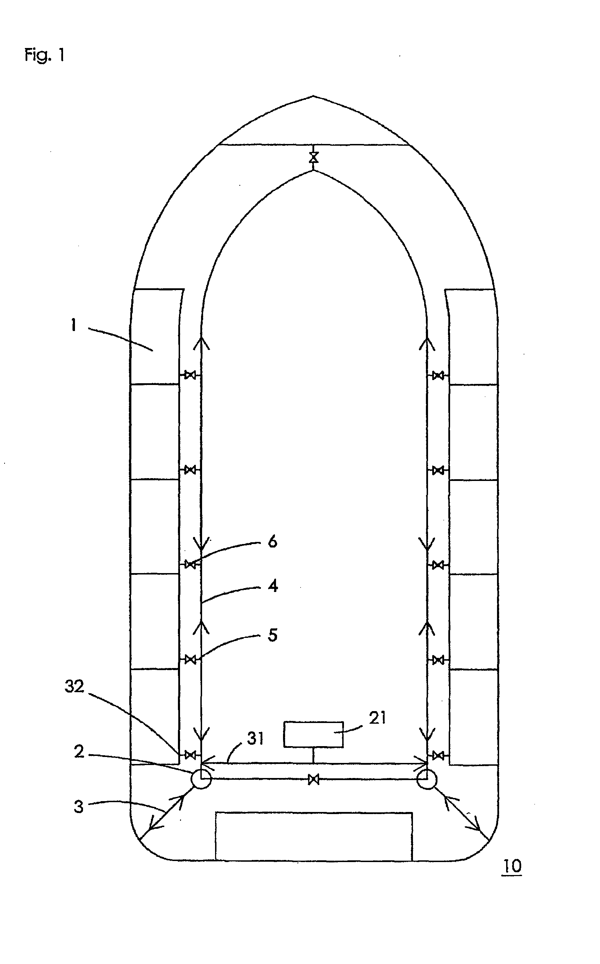

Figure 1 shows a system 10 built as a conventional tubing and pumping system for circulating ballast water to ballast tanks 1 onboard a ship. The ballast tanks 1 are typically arranged along the outer periphery of the ship, and each ballast tank 1 is provided with a distribution pipe 5 from the main feeder line 4 for the ballast water. The distribution pipes 5 are provided with a suitable number of valves 6.

The system 10 may serve both to supply and to discharge ballast water to and from the ballast tanks 1.

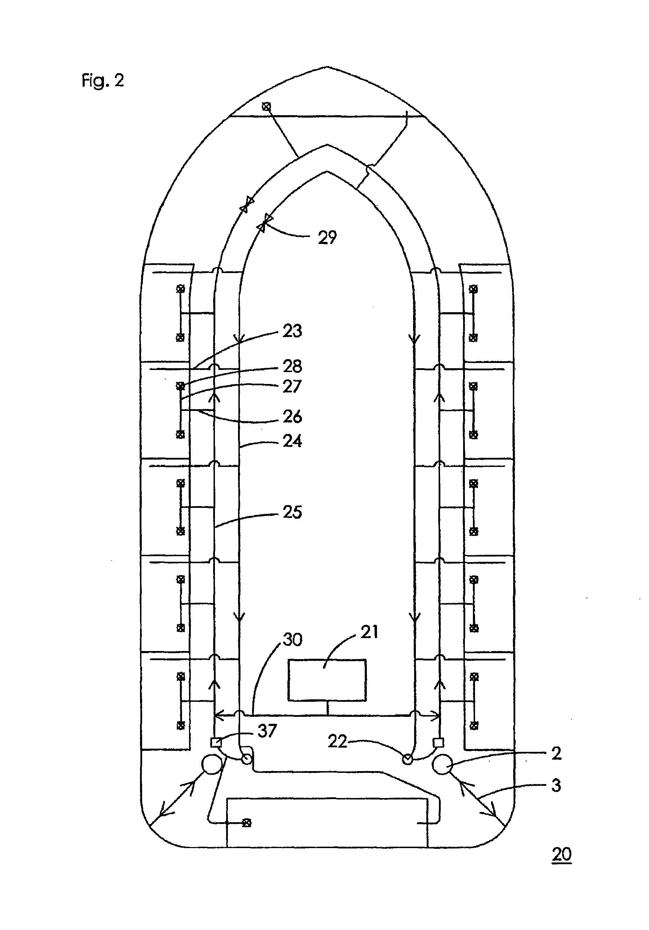

Figure 2 shows an embodiment of the invention, wherein a recirculation system 20 supplements the conventional ballast pumping system 10 shown in figure 1. The recirculation system 20 consists of recirculation pumps 22 and tubings to and from the ballast tanks 1 and a nitrogen generator 21.

The ballast water is pumped, by means of the recirculation pump 22, from a ballast tank 1 via return pipes 23 to return pipes 24 and back to the ballast tank 1 via the feeder pipe 25 and the distribution pipes 26.

It is an advantage by the treatment of the ballast water in the ballast tank rather than in the pipe feeder line of the ballast pump while the ballast water is on its way into the ballast tank that it is possible to remove the oxygen in the water to a far lower level. The treatment time is longer and hence more efficient.

Consequently, due to the conditions with lower oxygen content, the undesired micro-organisms are killed faster and more efficiently. Moreover, the recirculation system is an independent system that is not limited by the ballast pump and the associated tubing system.

Therefore the recirculation system may use a recirculation pump capable of running at a higher pressure than the ballast pump, whereby the solubility of the gas takes place more efficiently. Moreover, the bubble size of the nitrogen and/or azote gas will be smaller at a higher pressure which will further increase the process, since the surface area and hence the treatment surface of the gas will be larger, and, also, the bubbles will stay afloat for a longer period of time in the ballast water.

The system also comprises a nitrogen generator 21 which is connected to a feeder pipe 25 on the delivery side, after the recirculation pump 22. The feeder pipe 25 conveys the recirculated, nitrogen-containing ballast water back into the ballast tanks 1. It takes place via a distribution pipe 26 conveying the water into each ballast tank. The distribution pipe 26 is, in the shown embodiment, further divided between two branch pipes 27 to which nozzle heads 28 are associated.

The nozzle heads 28 consist of nozzles of the type configured for powered rotation about a first axis or nozzles configured for powered rotation about both a first and a second axis which is perpendicular on not perpendicular to the first axis to the effect that a two- or three-dimensional mixer pattern is formed.

The nitrogen generator 21 can be combined with or substituted by a carbon dioxide generator, and when, in the text above or below, reference is made to either nitrogen or carbon dioxide, it is not to be understood unequivocally since the one type of gas may replace the other. Also, the text refers to inert gas; that is not to be construed narrowly, as the phrase "inert gas" as used in this text means that the gas composition can be eg nitrogen, azote, or argon. It could also be some other gas or gas mixture in a ratio and concentration where bubbles from the gasses could wash out so much oxygen from the ballast tanks that organisms present therein are killed.

The recirculation system 20 comprises a suitable number of valves 29.

In the ballast tanks 1, a flow direction is formed from the coupling of the distribution pipes at the inlet 32 of ballast water into the ballast tank towards the opposite end of the ballast tank.

In figure 1, the flow direction from the inner side of the ship towards the outer periphery of the ship in the ballast tanks is situated aport, starboard and in the stem direction. The ballast tank in the stern end of the ship has a flow direction from the right towards the left.

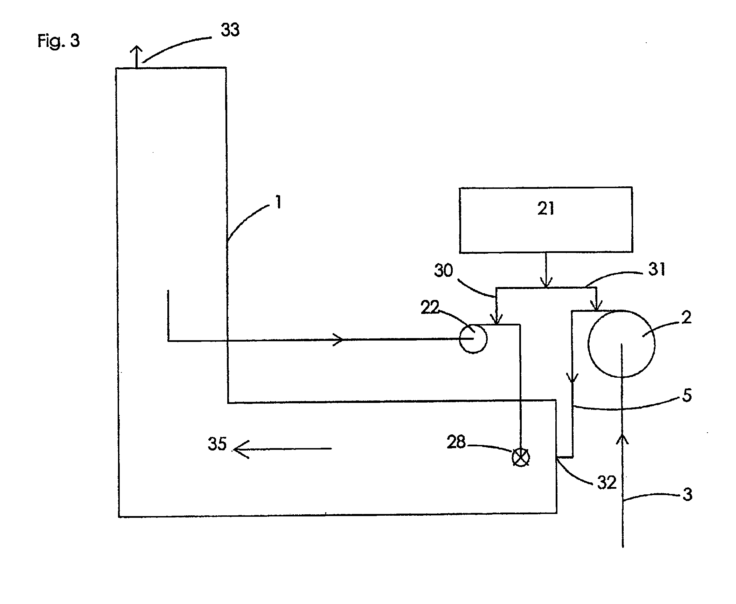

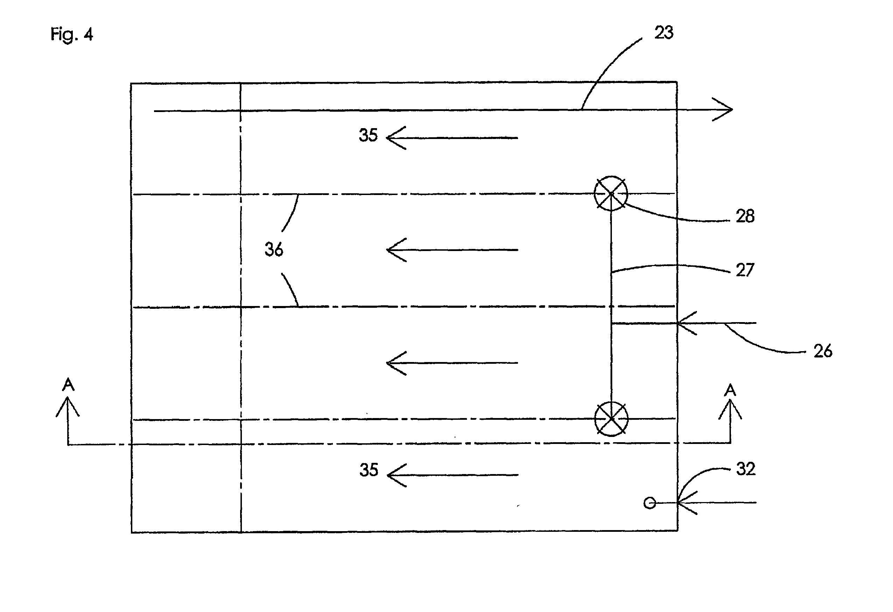

Figure 3 shows an L-shaped ballast tank, seen from the side, see section A in figure 4, with a nozzle head arranged in relative proximity of the inlet 32 to the ballast tank.

That means that the location of the nozzle head takes the flow direction in the tank into consideration in order to thereby obtain a more efficient treatment of the water.

Ballast tanks may be of varying configurations; eg the ballast tanks may be L-shaped, as shown in figure 3; they may also consist exclusively of a rectangularly configured tank which may be oriented either vertically or horizontally.

The number of nozzle heads 28 in a ballast tank 1 may vary in response to the configuration of the ballast tanks as well as to their size.

The oxygen-containing bubbles that are formed by the injection of the nitrogen gas via the nozzles will inherently seek upwards in a ballast tank. Irrespectively of the configuration of a ballast tank, the nozzle heads should therefore optimally be arranged in the lower zone of the tank.

From figure 3 it will appear that the ballast tank 1 is provided with a valve 33 at the top of the tank, whereby excess gas, if any, may be discharged.

According to one embodiment, the valve 33 may ensure a pressure slightly above that of the atmosphere in the ballast tank by means of an ongoing supply of nitrogen to the water in the ballast tank. Thereby it is prevented that atmospheric air containing oxygen enters into the ballast tank.

According to an aspect of the invention, inert gas, nitrogen and/or carbon dioxide may be supplied to the ballast water in the water supply pipe between the ballast pump and the ballast tank, on the delivery side, via the generator.

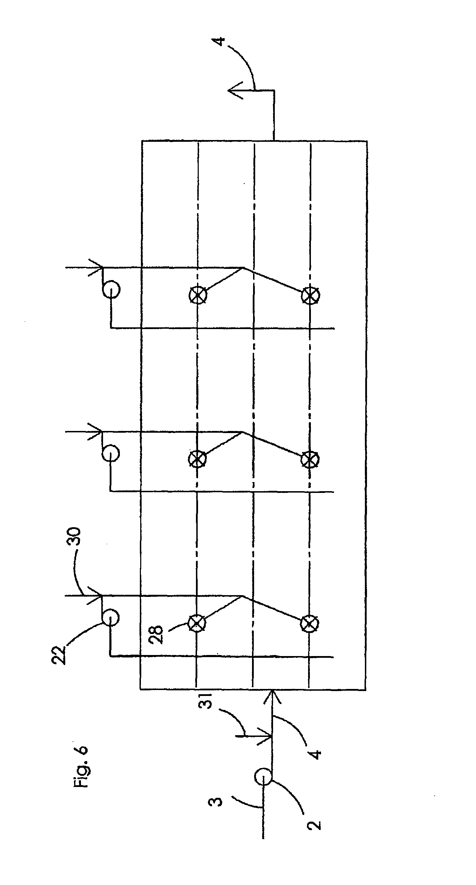

According to a further aspect of the invention, as illustrated in figure 6, wherein ballast water is treated while it passes through the ballast tank and is thus able to be passed on in treated form to other ballast tanks, it is an option to establish several rows of nozzle heads in a ballast tank, wherein each row is arranged transversally to the flow direction in the ballast tank, and wherein the rows are arranged successively after one another in the flow direction.

Thereby a lead front zone of treated ballast water is formed from one row to the next one, wherein zones of ballast water are treated onwards through the ballast tank in the flow direction. The front zone which is designated by an arrow in figures 3 and 4 will thus be essentially at right angles to the flow direction in the ballast tank.

Such treatment is made even more efficient in having a number of minor recirculation systems coupled to the same ballast tank 1, see figure 6. For instance, each row of nozzle heads 28 may constitute a recirculation system, wherein each row of nozzle heads may treat the ballast water on a continuous basis through the ballast tank in the flow direction to the effect that the recirculated water is discharged between the rows of nozzle heads successively in the flow direction.

Thereby the surrounding ballast water for each row of nozzle heads 28 in the ballast tank will, in the flow direction, be subject to further treatment in the next row of nozzle heads 28.

Thus each single minor recirculation system will further treat the ballast water from the preceding recirculation system which will thereby enhance the deoxydization in the front zone 35 of the ballast water.

By the system shown in figure 6, the ballast water will contain an amount of oxygen of eg about 8 ppm before the ballast pump, and, after the supply of nitrogen, the value may have come down as far as to eg 2 ppm, and by the continuous treatment through rows of nozzles the content is decreased from 2 ppm to eg 0.8, 0.4, and finally to 0.1 ppm. Thus, the ballast water will have a value of 0.1 pmm when the ballast water is passed on to the next ballast tank.

In case ballast water is treated concurrently in two tanks, and that ballast water is pumped on to the remaining ballast tanks via the ballast pumps, it is possible, in that case, to supply further nitrogen during passage from the one ballast tank to the other.

Figure 4 shows a ballast tank 1 seen from above. In the ballast tank two nozzle heads 28 are provided. Nitrogen-containing ballast water is advanced via distribution pipes 26, to branch pipes 27, on to the nozzle heads 28 in the ballast tank. The two nozzle heads 28 are arranged in the first portion of the tank, near the inflow of ballast water to the ballast tank 1 to the effect that the treatment process takes place at the inlet 32, and a lead front zone 35 is formed in the flow direction.

In the treatment of the ballast water and in order to optionally uphold an oxygen-poor or oxygen-free environment in the ballast water, nitrogen is added to the ballast tanks for periods of time or at fixed intervals, if necessary. The supply of nitrogen may take place directly to the ballast water in the ballast tanks via tubing 31 between nitrogen generator 21 and the ballast tanks 1 or via the recirculation system 20.

The periodic supply of nitrogen to the water in the ballast tank may likewise ensure that atmospheric air containing oxygen does not penetrate into the ballast tank.

Likewise, according to an embodiment, a device 37 may be integrated into the recirculation system 20 which is to ensure a convenient treatment with ozone, UV irradiation or the like, to the effect that it is possible to tailor the kind of treatment to a given situation which may occur in the future.

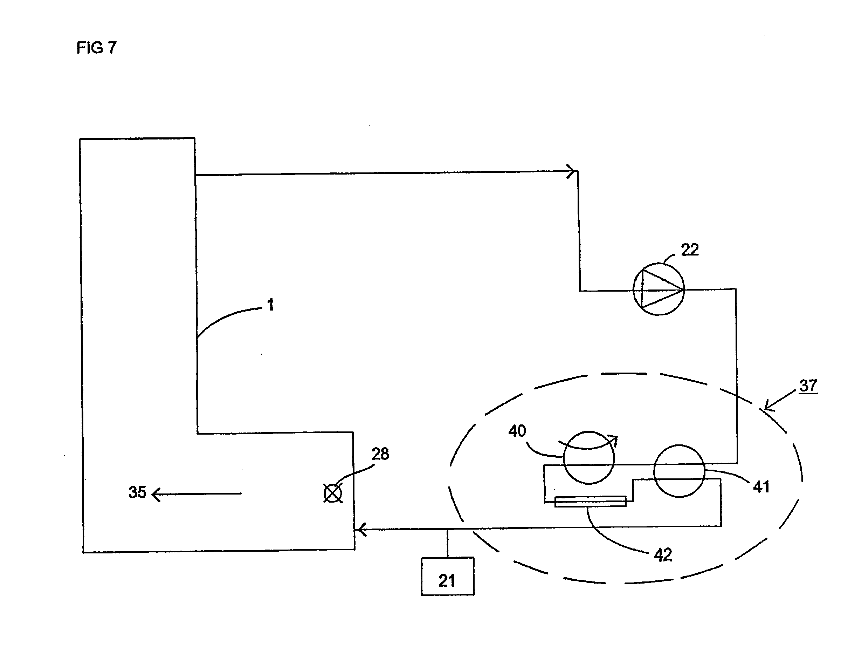

The integrated device may, in one embodiment, comprise a unit that further sterilises the water by means of heat. In the embodiment shown in figure 7, the device comprises a heat exchanger 41, such as eg a plate heat exchanger that exchanges heat between the water running into and out of, respectively, the device. In the following, such heat exchanger will be designated: the primary heat exchanger.

Thus, figure 7 shows two feeder lines passing through the primary heat exchanger. The uppermost feeder line is the line that takes water into the primary heat exchanger, and, as will appear from the figure, there is, to the left of the primary heat exchanger 41, a second heat exchanger 40. The second heat exchanger 40 supplies thermal energy to the water running through it. Typically that heat comes from the principal engine of the ship (not shown), but, of course, the heat may also be supplied from some other energy source.

From below the second heat exchanger 40 it will appear that the water that has passed through the second heat exchanger 40 runs through a partial area 42 before it leaves the device 37 via the bottom feeder line in the primary heat exchanger 41. The purpose of the partial area 42 is to increase the time during which the water has a high temperature, ie to increase the time elapsing from the point when the water leaves the second heat exchanger 40 and until it runs into the primary heat exchanger. Thus, the partial area will be designated the dwell-time increaser in the following. The purpose of the dwell-time increaser is to increase the time during which sterilisation by means of heat takes place. The dwell-time increaser 42 may, in a simple embodiment, merely comprise tubes with an increased diameter, since the throughput rate in that tube will thereby be decreased. The dwell-time increaser may also be constituted by a tank/vessel of eg about 0.3 m³.

The capacity of 0.3 m³ was selected on the basis of an example wherein the flow through the heat exchangers is 125 m³/hour. That volume will bring about a dwell time of about 10 seconds, cf: 125 m³ /3600 s X 10 s = 0.3 m³.

In the shown example the water has, when it leaves the ballast tank, a temperature of about 20 °C. After having passed the circulating pump 22, the water is heated to a temperature of about 80° in the primary heat exchanger 41, following which it is heated further by about 5 degrees in the second heat exchanger 40 before it passes through the dwell-time increaser 42. Then the water leaves the device 37 via the primary heat exchanger. In the shown example, it takes place at a temperature of about 25 °C.

Obviously the dwell time may be varied by changing the flow and/or the throughput rate, and the about 10 seconds are not always the optimal time either, but experience has shown that a dwell time of about 10 seconds at 85 °C, like in the shown example, has a good sterilising effect.

By including a heat exchanger as shown, the temperature of the water in the ballast tanks is also raised. The temperature on the outside of the ballast tanks (on the outside of the vessel) being thereby typically lower than the heated ballast water, the difference in temperature between the ballast water and the walls of the ballast tank will contribute to the formation of internal circulation patterns in the ballast tanks between the internal structures thereof. This increases the overall effect of the treatment of the ballast water.

In the exemplary embodiment explained above, comparatively narrow temperature intervals and time periods are employed. Of course, the invention is not restricted to said intervals or temperatures as they can be varied within the ordinary activities of the person skilled in the art.

A device 37 as described above having two heat exchangers may function independently in a plant for treating ballast water and is not functionally dependent on the units and other inventions described in the present application. Albeit - as explained above - there may be a synergy between the use of the device and other ones of the described inventions, it is, however, an option to use it in parallel or in series with any one of the other sterilisation methods described and set forth in the present application.

Moreover, the device may operate independently of or in any combination with the remaining sterilisation methods described and set forth in this application, and those aspects may be subject to independent applications.

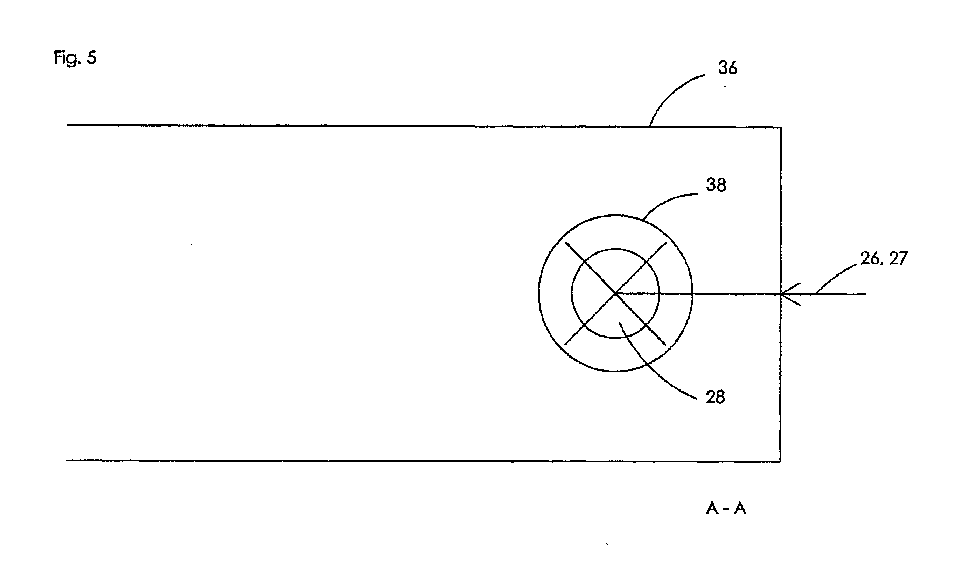

According to a convenient embodiment, the nozzle heads 28 may be arranged flush with the internal structures/bulkheads 36 of the ballast tank in openings 38 in the bulkheads 36 of the ballast tanks as will appear from figure 5. By that arrangement of the nozzle heads, the bulkheads of the ballast tanks will hinder as little as possible effective treatment of the ballast water, and the propagation of the gas-containing ballast water takes place most effectively to the effect that the least possible number of possible rotating nozzle heads can be used.

## Claims

1. A system for treating ballast water in ballast tanks (1) onboard vessels and offshore constructions, said system (20) comprising:
- one or more ballast tanks (1),
- a circulation pump (22) circulating or recirculating, via a tubing, ballast water from and to the one or more ballast tanks (1);
- a nitrogen and/or carbon dioxide generator (21) which is connected to the tubing (22) in such a manner that nitrogen and/or carbon dioxide can be supplied to the ballast water; and
- one or more nozzle heads (28) that are functionally connected to the tubing and is/are arranged in one or more ballast tanks (1), said one or more nozzle heads comprising at least one nozzle for injection of the gas-containing water into the one or more ballast tanks (1);
**characterised in that** at least one nozzle is configured for powered rotation about a first axis.

2. A system for treating ballast water in ballast tanks (1) onboard vessels and offshore constructions according to claim 1, said system comprising:
- one or more ballast tanks (1),
- a circulation pump (22) capable of circulating or recirculating, via a tubing, ballast water from and to the one or more ballast tanks (1);
- a nitrogen and/or carbon dioxide generator (21) which is connected to the tubing on the delivery side of the recirculating pump, in such a manner that nitrogen and/or carbon dioxide can be supplied to the ballast water; and
- one or more nozzle heads (28) that are functionally connected to the tubing and is/are arranged in one or more ballast tanks (1), said one or more nozzle heads (28) comprising at least one nozzle for injection of the gas-containing water into the one or more ballast tanks (1);
**characterised in that** at least one nozzle (34) configured for powered rotation about both a first and a second axis which is perpendicular or not perpendicular to the first axis to the effect that a three-dimensional mixer pattern is produced.

3. A system according to one or more of the preceding claims, **characterised in that** one or more nozzle heads (28) is/are arranged in a lower zone of the ballast tank (1) in the part of the ballast tank (1) where inflow (32) of ballast water takes place.

4. A system according to one or more of the preceding claims, **characterised in that** the one or more nozzle heads (28) is/are arranged flush with the interior bracing/bulkhead (36) of the ballast tank (1).

5. A system according to one or more of the preceding claims, **characterised in that** two or more nozzle heads (28) are arranged in one or more rows, where the one or more row(s) extend(s) transversally of the flow direction of the ballast water.

6. A system according to one or more of the preceding claims, **characterised in that** the nitrogen or carbon dioxide generator (21) comprises tubings (31) coupled to the tubing system (5) of the ballast water after the ballast pumps, on the delivery side, whereby the generator (21) is also capable of supplying nitrogen or carbon dioxide to the ballast water without the nozzles (34) being in operation.

7. A vessel comprising a system according to claims 1 - 6, **characterised in that** one ballast tank comprises one or more nozzle heads to the effect that the treatment of ballast water takes place in one ballast tank.

8. A vessel comprising a system according to claims 1 - 6, **characterised in that** two or more ballast tanks (1) comprise one or more nozzle heads to the effect that the treatment of ballast water takes place concurrently in several ballast tanks.

9. A vessel comprising a system according to claims 1 - 6, **characterised in that** at least one ballast tank (1) comprises several recirculation systems, wherein the return and feeder pipes of the recirculation systems are associated with nozzle heads (28), wherein the return and feeder pipes are arranged successively in the flow direction of the ballast tank.

10. A method for treating ballast water in ballast tanks by use of a system according to claims 1 - 6, wherein the method comprises the steps of:
- pumping ballast water into the ballast tank (1);
- circulating ballast water;
- supplying nitrogen and/or carbon dioxide to the ballast water in the recirculation system between the recirculation pump and the ballast tank, on the delivery side of the ballast pump, via the generator
**characterised in that** the method comprises the step of
- the nitrogen or carbon dioxide-containing water being injected into a ballast tank (1) via one or more rotating nozzle heads (28).

11. A method according to claim 10, **characterised in that** the method comprises the steps of:
- the treated ballast water being conveyed from a first ballast tank (1) to the remaining ballast tanks.

12. A method according to claims 10 - 11, **characterised in that** the method comprises the steps of:
- nitrogen and/or carbon dioxide being supplied to the ballast tanks (1) for periods of time or at intervals to uphold an oxygen-poor environment in the ballast tanks (1).

13. A method according to claims 10 - 12, **characterised in that** the method comprises the successive steps of:
- the nitrogen- or carbon dioxide-containing water being sprayed into a ballast tank (1) via a rotating nozzle head (28);
- the treated ballast water being passed on from a first ballast tank (1) to the remaining ballast tanks (1);
- nitrogen and/or carbon dioxide being supplied to the ballast tanks (1) for periods of time or at intervals to uphold an oxygen-poor environment in the ballast tanks (1).

14. A method for treating ballast water in ballast tanks by use of a system according to claims 1 - 6, **characterised in that** the method comprises the steps of:
- the nitrogen- or carbondioxide-containing water being sprayed into several or all of the ballast tanks (1) concurrently via rotating nozzle heads (28).

15. A method for cleaning ballast tanks by use of a system according to claims 1 - 6, **characterised in that** the method comprises the steps of:
- the ballast tanks being emptied to a level below the nozzle heads (28);
- fluid being pumped in, through the nozzles (34), whereby the interior faces of the ballast tank (1) are high-pressure water blasted.

## Patentansprüche

1. System zur Behandlung von Ballastwasser in Ballasttanks (1) an Bord von Fahrzeugen und Offshore-Konstruktionen, wobei das System (20) Folgendes umfasst:
- einen oder mehrere Ballasttanks (1),
- eine Zirkulationspumpe (22), die über eine Verrohrung Ballastwasser von und zu dem einen oder den mehreren Ballasttanks (1) zirkuliert oder rezirkuliert;
- einen Stickstoff- und/oder Kohlendioxidgenerator (21), der so mit der Verrohrung (22) verbunden ist, dass Stickstoff und/oder Kohlendioxid zum Ballastwasser zugeführt werden kann; und
- einen oder mehrere Düsenköpfe (28), der bzw. die mit der Verrohrung funktionell verbunden ist bzw. sind und in einem oder mehreren Ballasttanks (1) angebracht ist bzw. sind, wobei der eine oder die mehreren Düsenköpfe mindestens eine Düse zum Einspritzen von dem gashaltigen Wasser in den einen oder die mehreren Ballasttanks (1) umfasst bzw. umfassen;
**dadurch gekennzeichnet, dass** mindestens eine Düse zur angetriebenen Rotation um eine erste Achse ausgeformt ist.

2. System zur Behandlung von Ballastwasser in Ballasttanks (1) an Bord von Fahrzeugen und Offshore-Konstruktionen nach Anspruch 1, wobei das System Folgendes umfasst:
- einen oder mehrere Ballasttanks (1),
- eine Zirkulationspumpe (22), die über eine Verrohrung Ballastwasser von und zu dem einen oder den mehreren Ballasttanks (1) zirkulieren oder rezirkulieren kann;
- einen Stickstoff- und/oder Kohlendioxidgenerator (21), der an der Auslaufseite der Rezirkulationspumpe so mit der Verrohrung verbunden ist, dass Stickstoff- und/oder Kohlendioxid zu dem Ballastwasser zugeführt werden kann; und
- einen oder mehrere Düsenköpfe (28), der bzw. die mit der Verrohrung funktionell verbunden ist bzw. sind und in einem oder mehreren Ballasttanks (1) angebracht ist bzw. sind, wobei der eine oder die mehreren Düsenköpfe (28) mindestens eine Düse zum Einspritzen von dem gashaltigen Wasser in den einen oder die mehreren Ballasttanks (1) umfasst bzw. umfassen;
**dadurch gekennzeichnet, dass** mindestens eine Düse (34) zur angetriebenen Rotation um sowohl eine erste als auch eine zweite Achse, welche zur ersten Achse senkrecht oder nicht senkrecht ist, ausgeformt ist, mit der Auswirkung dass ein dreidimensionales Mischungsmuster erzeugt wird.

3. System nach einem oder mehreren der vorgehenden Ansprüche, **dadurch gekennzeichnet, dass** einer oder mehrere Düsenköpfe (28) in einem unteren Bereich des Ballasttanks (1) in dem Teil des Ballasttanks (1), wo die Einströmung (32) von Ballastwasser stattfindet, angeordnet ist bzw. sind.

4. System nach einem oder mehreren der vorgehenden Ansprüche, **dadurch gekennzeichnet, dass** der eine oder die mehreren Düsenköpfe (28) mit der inneren Verstärkung/dem inneren Schott (36) des Ballasttanks (1) bündig angeordnet ist bzw. sind.

5. System nach einem oder mehreren der vorgehenden Ansprüche, **dadurch gekennzeichnet, dass** zwei oder mehrere Düsenköpfe (28) in einer oder mehreren Reihen angeordnet sind, wo sich die eine oder mehreren Reihe(n) quer zur Strömungsrichtung des Ballastwassers erstreckt bzw. erstrecken.

6. System nach einem oder mehreren der vorgehenden Ansprüche, **dadurch gekennzeichnet, dass** der Stickstoff- oder Kohlendioxidgenerator (21) Rohrleitungen (31) umfasst, die mit dem Verrohrungssystem (5) des Ballastwassers nach den Ballastpumpen, an der Auslaufseite, verbunden sind, wobei der Generator (21) auch ohne, dass die Düsen (34) in Betrieb sind, Stickstoff oder Kohlendioxid zu dem Ballastwasser zuführen kann.

7. Fahrzeug umfassend ein System nach Anspruch 1 - 6, **dadurch gekennzeichnet, dass** ein Ballasttank einen oder mehrere Düsenköpfe umfasst mit der Auswirkung, dass die Behandlung von Ballastwasser in einem Ballasttank erfolgt.

8. Fahrzeug umfassend ein System nach Anspruch 1 - 6, **dadurch gekennzeichnet, dass** zwei oder mehrere Ballasttanks (1) einen oder mehrere Düsenköpfe umfassen mit der Auswirkung, dass die Behandlung von Ballastwasser gleichzeitig in mehreren Ballasttanks erfolgt.

9. Fahrzeug umfassend ein System nach Anspruch 1 - 6, **dadurch gekennzeichnet, dass** mindestens ein Ballasttank (1) mehrere Rezirkulationssysteme umfasst, wobei die Rücklauf- und Speiseleitungen des Rezirkulationssystems mit Düsenköpfen (28) verbunden sind, wobei die Rücklauf- und Speiseleitungen in der Strömungsrichtung des Ballasttanks aufeinanderfolgend angeordnet sind.

10. Verfahren zur Behandlung von Ballastwasser in Ballasttanks durch Anwendung eines Systems nach Anspruch 1 - 6, wobei das Verfahren die folgenden Schritte umfasst:
- Pumpen von Ballastwasser in den Ballasttank (1);
- Zirkulieren des Ballastwassers;
- Zuführen von Stickstoff und/oder Kohlendioxid zum Ballastwasser im Rezirkulationssystem zwischen der Rezirkulationspumpe und dem Ballasttank, an der Auslaufseite der Ballastpumpe, über den Generator
**dadurch gekennzeichnet, dass** das Verfahren die folgenden Schritte umfasst
- Einspritzen des stickstoff- oder kohlendioxidhaltigen Wassers in einen Ballasttank (1) über einen oder mehrere drehende Düsenköpfe (28).

11. Verfahren nach Anspruch 10, **dadurch gekennzeichnet, dass** das Verfahren die folgenden Schritte umfasst:
- Fördern des behandelten Ballastwassers von einem ersten Ballasttank (1) zu den übrigen Ballasttanks.

12. Verfahren nach Anspruch 10 - 11, **dadurch gekennzeichnet, dass** das Verfahren die folgenden Schritte umfasst:
- Zuführen von Stickstoff und/oder Kohlendioxid zu den Ballasttanks (1) in Zeiträumen oder Intervallen, um eine sauerstoffarme Umgebung in den Ballasttanks (1) aufrechtzuerhalten.

13. Verfahren nach Anspruch 10 - 12, **dadurch gekennzeichnet, dass** das Verfahren die folgenden aufeinanderfolgenden Schritte umfasst:
- Einspritzen des stickstoff- oder kohlendioxidhaltigen Wassers in einen Ballasttank (1) über einen drehenden Düsenkopf (28);
- Weiterleiten des behandelten Ballastwassers von einem ersten Ballasttank (1) zu den übrigen Ballasttanks (1);
- Zuführen von Stickstoff und/oder Kohlendioxid zu den Ballasttanks (1) in Zeiträumen oder Intervallen, um eine sauerstoffarme Umgebung in den Ballasttanks (1) aufrechtzuerhalten.

14. Verfahren zur Behandlung von Ballastwasser in Ballasttanks durch Anwendung eines Systems nach Anspruch 1 - 6, **dadurch gekennzeichnet, dass** das Verfahren die folgenden Schritte umfasst:
- gleichzeitiges Einspritzen des stickstoff- oder kohlendioxidhaltigen Wassers in mehrere oder alle Ballasttanks (1) über drehende Düsenköpfe (28).

15. Verfahren zur Reinigung von Ballasttanks durch Anwendung eines Systems nach Anspruch 1 - 6, **dadurch gekennzeichnet, dass** das Verfahren die folgenden Schritte umfasst:
- Entleeren der Ballasttanks auf ein Niveau unter den Düsenköpfen (28);
- Einpumpen von Fluid, durch die Düsen (34), wodurch die Innenflächen des Ballasttanks (1) hochdruckwassergestrahlt werden.

## Revendications

1. Système de traitement d'eau de ballast dans des citernes de ballast (1) à bord de navires et de constructions en mer, ledit système (20) comprenant:
- une ou plusieurs citernes de ballast (1),
- une pompe de circulation (22) pour la circulation ou la recirculation, par l'intermédiaire d'une tubulure, d'eau de ballast depuis et à l'une ou plusieurs citernes de ballast (1);
- un générateur d'azote et/ou de dioxyde de carbone (21) qui est relié à la tubulure (22) d'une telle manière que de l'azote et/ou du dioxyde de carbone peuvent être fournis à l'eau de ballast; et
- une ou plusieurs têtes de buse (28) qui sont reliées fonctionnellement à la tubulure et sont disposées dans une ou plusieurs citernes de ballast (1), lesdites une ou plusieurs têtes de buses comprenant au moins une buse pour l'injection de l'eau contenant du gaz dans l'une ou plusieurs citernes de ballast (1);
**caractérisé en ce qu'**au moins une buse est configurée pour la rotation entraînée autour d'un premier axe.

2. Système de traitement d'eau de ballast dans des citernes de ballast (1) à bord de navires et de constructions en mer selon la revendication 1, ledit système comprenant:
- une ou plusieurs citernes de ballast (1),
- une pompe de circulation (22) capable de la circulation ou de la recirculation, par l'intermédiaire d'une tubulure, d'eau de ballast depuis et à l'une ou plusieurs citernes de ballast (1);
- un générateur d'azote et/ou de dioxyde de carbone (21) qui est relié à la tubulure sur le côté de livraison de la pompe de recirculation d'une telle manière que de l'azote et/ou du dioxyde de carbone peuvent être fournis à l'eau de ballast; et
- une ou plusieurs têtes de buse (28) qui sont reliées fonctionnellement à la tubulure et sont disposées dans une ou plusieurs citernes de ballast (1), lesdites une ou plusieurs têtes de buses (28) comprenant au moins une buse pour l'injection de l'eau contenant du gaz dans l'une ou plusieurs citernes de ballast (1);
**caractérisé en ce qu'**au moins une buse (34) est configurée pour la rotation entraînée à la fois autour d'un premier et d'un deuxième axe qui est perpendiculaire ou non perpendiculaire au premier axe si bien qu'un modèle de mélange à trois dimensions est produit.

3. Système selon l'une ou plusieurs des revendications précédentes, **caractérisé en ce qu'**une ou plusieurs têtes de buse (28) sont disposées dans une zone inférieure de la citerne de ballast (1) dans la partie de la citerne de ballast (1) où l'entrée (32) d'eau de ballast a lieu.

4. Système selon l'une ou plusieurs des revendications précédentes, **caractérisé en ce qu'**une ou plusieurs têtes de buse (28) sont disposées à fleur avec l'entretoisement intérieur/la cloison (36) de la citerne de ballast (1).

5. Système selon l'une ou plusieurs des revendications précédentes, **caractérisé en ce que** deux ou plusieurs têtes de buse (28) sont disposées en une ou plusieurs rangées, l'une ou plusieurs rangées s'étendant transversalement par rapport à la direction d'écoulement de l'eau de ballast.

6. Système selon l'une ou plusieurs des revendications précédentes, **caractérisé en ce que** le générateur d'azote et/ou de dioxyde de carbone (21) comprend des tubulures (31) couplées au système de tubulure (5) de l'eau de ballast après les pompes de ballast, sur le côté de livraison, le générateur (21) étant aussi capable de fournir de l'azote ou du dioxyde de carbone à l'eau de ballast sans les buses (34) étant en fonctionnement.

7. Navire comprenant un système selon les revendications 1 à 6, **caractérisé en ce qu'**une citerne de ballast comprend une ou plusieurs têtes de buse si bien que le traitement d'eau de ballast a lieu dans une citerne de ballast.

8. Navire comprenant un système selon les revendications 1 à 6, **caractérisé en ce qu'**une ou plusieurs citernes de ballast (1) comprennent une ou plusieurs têtes de buse si bien que le traitement d'eau de ballast a lieu simultanément dans plusieurs citernes de ballast.

9. Navire comprenant un système selon les revendications 1 à 6, **caractérisé en ce qu'**au moins une citerne de ballast (1) comprend plusieurs systèmes de recirculation, les conduites de retour et d'amenée des systèmes de recirculation étant associées à des têtes de buse (28), les conduites de retour et d'amenée étant disposées successivement dans la direction d'écoulement de la citerne de ballast.

10. Procédé de traitement d'eau de ballast dans des citernes de ballast à l'aide d'un système selon les revendications 1 à 6, ledit procédé comprenant les étapes consistant à:
- pomper de l'eau de ballast dans la citerne de ballast (1);
- circuler de l'eau de ballast;
- fournir de l'azote et/ou du dioxyde de carbone à l'eau de ballast dans le système de recirculation entre la pompe de recirculation et la citerne de ballast, sur le côté de livraison de la pompe de ballast, par l'intermédiaire du générateur,
**caractérisé en ce que** le procédé comprend l'étape consistant à:
- l'eau contenant de l'azote ou du dioxyde de carbone étant injectée dans une citerne de ballast (1) par l'intermédiaire d'une ou de plusieurs têtes de buse rotatives (28).

11. Procédé selon la revendication 10, **caractérisé en ce que** le procédé comprend les étapes consistant à:
- l'eau de ballast traitée étant acheminée à partir d'une première citerne de ballast (1) aux citernes de ballast restantes.

12. Procédé selon les revendications 10 à 11, **caractérisé en ce que** le procédé comprend les étapes consistant à:
- de l'azote et/ou du dioxyde de carbone étant fournis aux citernes de ballast (1) pour des périodes de temps ou à des intervalles afin de maintenir un environnement pauvre en oxygène dans les citernes de ballast (1).

13. Procédé selon les revendications 10 à 12, **caractérisé en ce que** le procédé comprend les étapes successives consistant à:
- l'eau contenant de l'azote ou du dioxyde de carbone étant injectée dans une citerne de ballast (1) par l'intermédiaire d'une tête de buse rotative (28);
- l'eau de ballast traitée étant acheminée à partir d'une première citerne de ballast (1) aux citernes de ballast restantes (1);
- de l'azote et/ou du dioxyde de carbone étant fournis aux citernes de ballast (1) pour des périodes de temps ou à des intervalles afin de maintenir un environnement pauvre en oxygène dans les citernes de ballast (1).

14. Procédé pour le traitement d'eau de ballast dans des citernes de ballast par l'utilisation d'un système selon les revendications 1 à 6, **caractérisé en ce que** le procédé comprend les étapes consistant à:
- l'eau contenant de l'azote ou du dioxyde de carbone étant injectée dans plusieurs ou toutes les citernes de ballast (1) simultanément par l'intermédiaire de têtes de buse rotatives (28).

15. Procédé de nettoyage de citernes de ballast à l'aide d'un système selon les revendications 1 à 6, **caractérisé en ce que** ledit procédé comprend les étapes consistant à:
- les citernes de ballast étant vidées à un niveau au-dessous des têtes de buse (28);
- du fluide étant y pompé à travers les buses (34), les faces intérieures de la citerne de ballast (1) étant soufflées par l'eau à haute pression.
